# EUROPÄISCHE PATENTSCHRIFT

(11) **EP 1 024 031 B1**
(45) Veröffentlichungstag und Bekanntmachung des Hinweises auf die Patenterteilung: **23.03.2005**
(21) Anmeldenummer: 99122196.1
(22) Anmeldetag: 06.11.1999
(51) Int. Cl.: B60B 37/00, B60B 33/00, A47L 9/00, B60B 37/10

(54) **Rad für ein Haushaltsgerät, insbesondere einen Staubsauger**
Wheel for a household appliance, in particular for a vacuum cleaner
Roue pour un appareil électroménager, en particulier pour un aspirateur

(30) Priorität: 29.01.1999 DE 19903532
(43) Veröffentlichungstag der Anmeldung: 02.08.2000
(73) Patentinhaber: AEG Hausgeräte GmbH, 90429 Nürnberg (DE)
(72) Erfinder: Stettner, Gerhard, 90768 Fürth (DE); Kalwa, Dieter, 90513 Zirndorf (DE); Tillmanns, Jörg, 90431 Nürnberg (DE)

(56) Entgegenhaltungen:
- WO-A-97/12797
- DE-A- 4 315 711
- GB-A- 2 325 616

## Beschreibung

Die Erfindung betrifft ein Rad für ein Haushaltsgerät, insbesondere einen Staubsauger, mit einem Radkörper und einer an diesem angeformten vorspringenden Lagerbuchse, an der ein oder mehrere federnde, eine Rastnase aufweisende Abschnitte vorgesehen sind, wobei das Rad mit der Lagerbuchse auf einen Lagerzapfen oder eine Lagerhülse des Haushaltsgeräts aufschnappbar ist, wie z.B. aus GB-A- 2 325616 bekannt ist.

Solche Räder finden sich beispielsweise bei Haushaltsstaubsaugern, damit diese im Betrieb problemlos bewegt und hinterhergezogen werden können. Das Rad ist ein separat gefertigtes Kunststoffbauteil, das einen Radkörper aufweist, an dem zentral und die Achse bildend eine Lagerbuchse angeformt ist. Um das Rad an einem Lagerzapfen oder einer Lagerhülse des Gehäuses des Staubsaugers befestigen zu können, sind an der Lagerbuchse mehrere federnde Abschnitte vorgesehen, wobei an jedem Abschnitt eine Rastnase angeformt ist. Um das Rad am Staubsaugergehäuse befestigen zu können, wird die Lagerbuchse auf den Lagerzapfen bzw. die Lagerhülse aufgeschoben, wobei die federnden Abschnitte verbogen werden, bis die Rastnasen den Lagerzapfen oder die Lagerhülse an entsprechenden Stellen hintergreifen, die Abschnitte also wieder in ihre Ausgangsposition zurückfedern. Auf diese Weise kann das Rad einfach auf den Lagerzapfen oder die Lagerhülse aufgeschnappt werden. Aufwendig jedoch ist die Herstellung des Rades, da zur Ausbildung der an den Abschnitten vorgesehenen WO-A-97 127 97 zeigt ein Rad das im Bereich der Lagerbuchse in Verlängerung eines federnden Abschnitts eine Durchbreckung aufweist. Rastnasen am Kunststoffbearbeitungswerkzeug entsprechende Schieber vorgesehen sein müssen, damit die Rastnasen überhaupt ausgebildet werden können. Das Werkzeug ist folglich sehr aufwendig und teuer.

Der Erfindung liegt damit das Problem zugrunde, ein Rad für ein Haushaltsgerät anzugeben, welches einfach herstellbar ist.

Zur Lösung dieses Problems ist ein Rad mit den Merkmalen des Anspruchs 1.

Der Radkörper ist also nicht mehr vollständig geschlossen, vielmehr sind mehrere Durchbrechungen am Radkörper vorgesehen, wobei diese ih Verlängerung des jeweiligen Abschnitts und damit der Rastnase angeordnet sind. Ein solches Rad ist wesentlich einfacher herzustellen, da am Werkzeug entsprechende Vorsprünge oder Stege vorgesehen werden können, die in diese Durchbrechungen eingreifen und mittels welche dann die Rastnase ausgebildet werden kann. Es sind hier also keine aufwendigen Schieber mehr erforderlich. Vielmehr reicht es aus, an einem Teil des Werkzeugs diese entsprechenden die Durchbrechungen durchgreifenden Vorsprünge oder Stege anzuordnen. Das Werkzeug kann also insgesamt wesentlich einfacher ausgestaltet sein, die Herstellung des Rades wird hierdurch vereinfacht und insgesamt kostengünstiger. Daneben haben die Durchbrechungen aber auch einen sich optisch positiv auswirkenden Effekt, da dem Rad auf diese Weise ein felgenähnliches Aussehen verliehen wird.

Durch die Verwendung eines derart ausgestalteten Werkzeugs, welches die Durchbrechungen mit entsprechenden Werkzeugabschnitten durchsetzt, ist es mit besonderem Vorteil ferner möglich, die Rastnase mit einer Hinterschneidung zu versehen, wobei in dieser Hinterschneidung ein Schmiermittel aufgenommen werden kann, so daß das Rad noch leichter auf dem Lagerzapfen oder der Lagerhülse läuft. Die Rastnasen selbst, die bevorzugt mit einer Einführschräge versehen sind, können erfindungsgemäß an der Außenseite oder der Innenseite der Lagerbuchse angeformt sein. Sind sie an der Außenseite angeformt, so wird die Lagerbuchse in eine entsprechende Lagerhülse am Gerätegehäuse eingeschoben, sind sie an der Innenseite angeformt, so ist der Innendurchmesser der Lagerbuchse größer als der eines Lagerzapfens oder einer Lagerhülse des Haushaltsgeräts, so daß die Lagerbuchse quasi von außen aufgeschoben wird.

Als zweckmäßig hat es sich erwiesen, wenn mehrere, insbesondere drei Abschnitte mit zugehörigen Durchbrechungen vorgesehen sind, wobei die Abschnitte äquidistant voneinander beabstandet sind, so daß sich eine gleichmäßige Halterung ergibt.

Neben dem Rad betrifft die Erfindung ferner ein Haushaltsgerät, insbesondere einen Staubsauger, mit mehreren auf am, Gerätegehäuse vorgesehenen Lagerzapfen oder Lagerhülsen aufgeschnappten oder aufschnappbaren Rädern der vorbeschriebenen Art.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine perspektivische Prinzipskizze eines erfindungsgemäßen Rades,
- Fig. 2: eine Schnittansicht durch ein erfindungsgemäßes Rad sowie eines Teils des zur Herstellung des Rades benötigten Werkzeugs,
- Fig. 3: eine Teilschnittansicht eines erfindungsgemäßen Haushaltsgeräts im Bereich der Befestigung eines Rades am Gerätegehäuse, und
- Fig. 4: eine Teilschnittansicht eines erfindungsgemäßen Rades einer zweiten Ausführungsform.

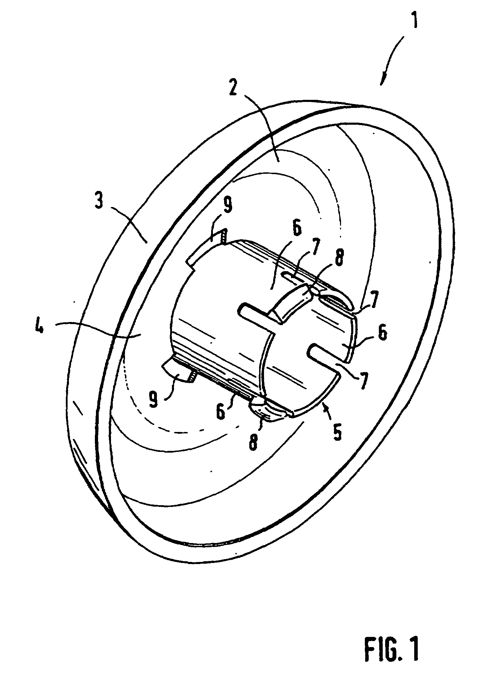

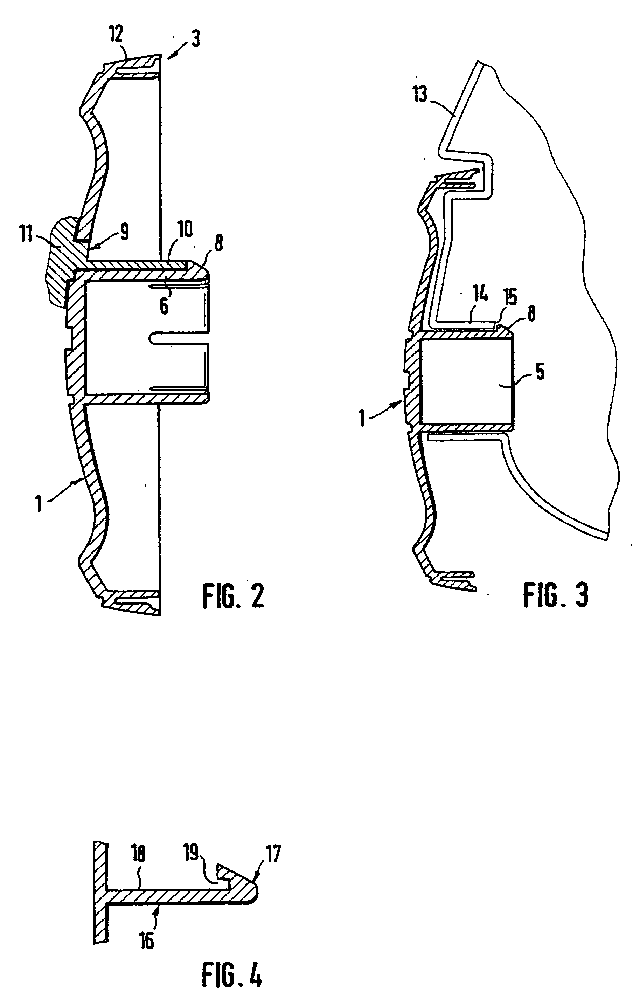

Fig. 1 zeigt ein erfindungsgemäßes Rad 1, bestehend aus einem Radkörper 2, welcher einen Laufflächenabschnitt 3 und einen felgenartigen Abschnitt 4 umfaßt. Zentral am Radkörper 2 ist eine Lagerbuchse 5 nach innen vorspringend angeformt. Die Lagerbuchse 5 weist im gezeigten Beispiel drei federnde Abschnitte 6 auf, die durch entsprechende Wandeinschnitte 7 bezüglich der feststehenden Buchsenwandung beweglich sind. An den oberen Enden der federnden Abschnitte 6 sind Rastnasen 8 angeformt. Am Radkörper 2 im Bereich des felgenartigen Abschnitts 4 sind in unmittelbarer Verlängerung der federnden Abschnitte Durchbrechungen 9 eingeformt, mittels welchen des Anformen der Rastnasen 8 wesentlich vereinfacht wird. Durch die Durchbrechung 9 kann ein Vorsprung oder Steg 10 eines Werkzeugs 11, mittels welchem das in Fig. 2 im Schnitt dargestellte Rad 1 in einem Kunststoffspritzverfahren hergestellt wird, hindurchgreifen, wobei der Steg 10 das für die Ausbildung der Rastnase 8 erforderliche Werkzeuggegenstück bildet. Von oben greift ein nicht näher dargestelltes zweites Werkzeug ein. Da der Vorsprung oder Steg 10 durch die Durchbrechung 9 greifen kann und auf diese Weise höchst einfach die Rastnase 8 ausgebildet werden kann, sind irgendwelche Schieber oder dergleichen, die bis dato zur Anformung der Rastnase erforderlich waren, nicht mehr erforderlich. Das Rad kann also einfacher hergestellt werden, das Werkzeug ist einfacher aufgebaut, was sich insbesondere hinsichtlich der Werkzeugkosten bemerkbar macht.

Wie Fig. 1 zu entnehmen ist, sind die hier gezeigten drei federnden Abschnitte 6 und damit auch die Durchbrechungen 9 äquidistant voneinander beabstandet. Wenngleich im gezeigten Ausführungsbeispiel die Rastnasen an der Buchsenaußenseite angeformt sind, ist es selbstverständlich auch möglich, diese entsprechend an der Innenseite auszubilden, wie auch noch weitere Abschnitte vorgesehen sein können.

Wie Fig. 2 ferner zu entnehmen ist, ist im Bereich der Lauffläche 2 eine äußere federnde Lauffläche 12 vorgesehen, mit welcher das Rad auf dem Boden aufliegt und die für eine entsprechende Federung und Dämpfung sorgt.

Fig. 3 zeigt in Form einer Schnittansicht einen Ausschnitt aus einem erfindungsgemäßen Haushaltsgerät im Bereich der Befestigung eines erfindungsgemäßen Rades 1 am Gerätegehäuse 13. Am Gerätegehäuse 13 ist im gezeigten Beispiel eine Lagerhülse 14 angeformt. In diese greift die Lagerbuchse 5 des Rades 1 ein. Beim Einschieben werden die federnden Abschnitte 6 nach innen gedrückt, wobei die Rastnasen, siehe Fig. 2, hierzu bevorzugt eine Einführschräge besitzen. Das Rad 1 wird soweit in die Lagerbuchse 14 eingeschoben, bis die Rastnasen 8 die Hinterkante 15 der Lagerbuchse hintergreifen.

Schließlich zeigt Fig. 4 in Form einer Teilschnittansicht eine weitere Ausführungsform einer Lagerbuchse 16 eines erfindungsgemäßen Rades. Bei dieser ist die Rastnase 17 des federnden Abschnitts 18 mit einer Hinterschneidung 19 versehen. Diese Hinterschneidung 19 dient einerseits der Verbesserung der Verrastung und der Führung des Rades an der Lagerhülse des Haushaltsgeräts, andererseits kann in der Hinterschneidung 19 auch Schmiermittel aufgenommen sein, um den Lauf des Rades zu verbessern.

## Patentansprüche

1. Rad (1) für ein Haushaltsgerät, insbesondere einen Staubsauger, mit einem Radkörper (2) und einer an diesem angeformten vorspringenden Lagerbuchse (5), an der ein oder mehrere federnde, eine Rastnase aufweisende Abschnitte (6) vorgesehen sind, wobei das Rad mit einer Lagerbuchse auf einen Lagerzapfen oder eine Lagerhülse des Haushaltsgerätes aufschnappbar ist, **dadurch gekennzeichnet**, der Radkörper im Bereich der Lagerbuchse in Verlängerung des oder jedes federnden Abschnitts eine Durchbrechung vorgesehen ist, und dass die Rastnase (17) mit einer Hinterschneidung (19) versehen ist.

2. Rad nach Anspruch 1, **dadurch gekennzeichnet, dass** die Rastnase (8, 17) an der Außenseite oder der Innenseite der Lagerbuchse (5, 16) angeformt ist.

3. Rad nach Anspruch 1 oder 2, **dadurch gekennzeichnet, dass** mehrere, insbesondere drei Abschnitte (6) mit zugehörigen Durchbrechungen (9) vorgesehen sind, die äquidistant voneinander beabstandet sind.

4. Rad nach einem der vorangehenden Ansprüche, **dadurch gekennzeichnet, dass** an jeder Rastnase eine Einführschräge vorgesehen ist.

5. Haushaltsgerät, insbesondere Staubsauger, mit mehreren auf am Gerätegehäuse vorgesehenen Lagerzapfen oder Lagerhülsen (14) aufgeschnappten oder aufschnappbaren Rädern (1) nach einem der vorangehenden Ansprüchen.

## Claims

1. Wheel (1) for a domestic appliance, in particular a vacuum cleaner, having a wheel body (2) and a projecting bearing bush (5) integrally moulded therewith, on which one or more resilient sections (6) having a locating lug are provided, the wheel being capable of being snap-fitted with a bearing bush on to a journal or bearing sleeve, **characterised in that** the wheel body is provided in the region of the bearing bush, as an extension of the or each resilient section, with a perforation, and **in that** the locating lug (17) is provided with an undercut (19).

2. Wheel according to claim 1, **characterised in that** the locating lug (8, 17) is formed integrally on the exterior or interior of the bearing bush (5, 16).

3. Wheel according to claim 1 or 2, **characterised in that** plural, in particular three sections (6) are provided with associated perforations (9) which are spaced equidistantly from one another.

4. Wheel according to one of the preceding claims, **characterised in that** an insertion slope is provided on each locating lug.

5. Domestic appliance, in particular vacuum cleaner, having plural wheels (1) which are snap-fitted or may be snap-fitted on to journals or bearing sleeves (14) provided on the appliance housing according to one of the preceding claims.

## Revendications

1. Roue (1) pour un appareil ménager, en particulier un aspirateur, avec un corps de roue (2) et une douille de palier saillante (5) rapportée par formage à celui-ci , à laquelle sont prévues une ou plusieurs sections élastiques (6), présentant un ergot d'encliquetage, où la roue peut être enclenchée avec une douille de palier sur un tourillon ou un manchon de palier de l'appareil ménager, **caractérisée en ce que** le corps de roue, dans la zone de la douille de palier, dans le prolongement du ou de chaque section élastique, présente un perçage, et **en ce que** l'ergot d'encliquetage (17) présente une contre-dépouille (19).

2. Roue selon la revendication 1, **caractérisée en ce que** l'ergot d'encliquetage (8,17) est rapporté par formage au côté extérieur ou au côté intérieur de la douille de palier (5,16).

3. Roue selon la revendication 1 ou 2, **caractérisée en ce que** plusieurs, en particulier trois sections (6) avec des perçages associés (9) sont prévues qui sont espacés d'une manière équidistante les uns des autres.

4. Roue selon l'une des revendications précédentes, **caractérisée en ce qu'**il est prévu à chaque ergot d'encliquetage un biais d'introduction.

5. Appareil ménager, en particulier aspirateur, avec plusieurs roues (1) enclenchées ou pouvant être enclenchées sur des tourillons ou manchons de palier (14) prévus au boîtier d'appareil selon l'une des revendications précédentes.
